# EUROPÄISCHE PATENTSCHRIFT

(11) **EP 2 553 325 B1**
(45) Veröffentlichungstag und Bekanntmachung des Hinweises auf die Patenterteilung: **01.03.2017**
(21) Anmeldenummer: 11712239.0
(22) Anmeldetag: 30.03.2011
(51) Int. Cl.: F21V 14/08, B60Q 1/14, B60Q 1/08, F21S 8/10

(54) **PROJEKTIONSSCHEINWERFERANORDNUNG FÜR FAHRZEUGE**
PROJECTION HEADLIGHT ARRANGEMENT FOR VEHICLES
SYSTÈME PROJECTEUR POUR VÉHICULES

(30) Priorität: 31.03.2010 DE 102010013558
(43) Veröffentlichungstag der Anmeldung: 06.02.2013
(73) Patentinhaber: Hella KGaA Hueck & Co, 59552 Lippstadt (DE)
(72) Erfinder: EHM, Matthias, 59558 Lippstadt (DE)
(86) Internationale Anmeldenummer: PCT/EP2011/054894
(87) Internationale Veröffentlichungsnummer: WO 2011/121013

(56) Entgegenhaltungen:
- EP-A1- 2 157 362
- EP-A2- 2 085 264
- EP-A2- 2 280 220
- WO-A1-2011/003500
- WO-A1-2011/047751
- DE-A1-102004 032 095
- DE-A1-102007 054 048
- JP-A- 2008 143 505

## Beschreibung

Die Erfindung betrifft eine Projektionsscheinwerferanordnung für Fahrzeuge nach dem Oberbegriff des Patentanspruchs 1.

Aus der EP 0 900 972 A1 ist eine Projektionsscheinwerferanordnung bestehend aus im eckseitigen Bugbereich eines Fahrzeugs angeordneter und gleich ausgeführter linker und rechter Projektionsscheinwerfer bekannt, die jeweils über eine Lichtquelle, über einen Reflektor, eine Linse und über eine zwischen der Linse und dem Reflektor angeordnete Blendeneinrichtung verfügen. Die Blendeneinrichtung weist eine Blendenwelle auf, die um ihre eigene Längsachse drehbar in mehrere Drehstellungen verstellbar angeordnet ist. Die Blendenwelle wird mittels einer Stelleinheit um die Drehachse bewegt, die in horizontaler Richtung und quer zur optischen Achse des Projektionsscheinwerfers verläuft. Die Blendenwelle weist vier Blendkanten auf, die in Drehrichtung versetzt um 90° zueinander angeordnet sind. Durch Verdrehen der Blendenwelle in eine Arbeitsstellung, in der eine der Blendkanten wirksam ist, kann eine Hell-Dunkel-Grenze zur Erzeugung eines symmetrischen Abblendlichtes (Basis-, Stadt- oder Schlechtwetterlicht) oder einer asymmetrischen Abblendlicht- oder einer Autobahnlicht- oder einer Fernlichtverteilung gebildet werden. Die bekannte Projektionsscheinwerferanordnung ist auf die Abbildung von standardisierten Lichtverteilungen beschränkt, die keine Anpassung an die aktuelle Verkehrssituation ermöglichen. Die bekannte Projektionsscheinwerferanordnung weist insbesondere keine Mittel auf, um eine Markierungslichtfunktion zu erzeugen. Eine Markierungslichtfunktion dient-wie es in der DE 10 2008 025 947 A1 beschrieben ist - zur Beleuchtung eines in einem Fahrzeugvorfeld befindlichen Objektes, wie beispielsweise eines die Straße kreuzenden Lebewesens oder ein Straßenschild. Durch die Markierungslichtfunktion soll der Fahrzeugführer gezielt auf Objekte im Fahrzeugvorfeld hingewiesen werden, damit er schnell auf die hierdurch implizierte Verkehrssituation reagieren kann.

Aus der nachveröffentlichten WO 2011/003500 A1 ist eine Projektionsscheinwerferanordnung mit einer Blendenwelle bekannt, die in Umfangsrichtung mehrere unterschiedliche Blendenkanten zur Erzeugung unterschiedlicher Lichtfunktionen aufweist.

Aus der nachveröffentlichten EP 2 280 220 A2 ist eine Projektionsscheinwerferanordnung für Fahrzeuge mit einer Blendenwelle bekannt, die in Umfangsrichtung vier gleich verteilte abragende Stege mit einer unterschiedlichen Blendenkante aufweist.

Aus der nachveröffentlichten WO 2011/047751 A1 ist eine Projektionsscheinwerferanordnung für Fahrzeuge mit einer Blendenwelle bekannt, die im Querschnitt im Wesentlichen kreisförmig ausgebildet ist.

Die EP 2 157 362 A1 weist eine Projektionsscheinwerferanordnung für Fahrzeuge auf, bei der ein Projektionsscheinwerfer einen Reflektor, eine Lichtquelle, eine Linse sowie eine zwischen der Linse und dem Reflektor angeordnete Blendenwelle aufweist. Die Blendenwelle weist mehrere in Umfangsrichtung unterschiedlich konturierte Blendkanten auf, so dass mehrere Lichtfunktionen erzeugt werden können. Eine Blendkante zur Erzeugung einer Markierungslichtfunktion ist nicht vorgesehen.

Aufgabe der vorliegenden Erfindung ist es, eine Projektionsscheinwerferanordnung für Fahrzeuge derart weiterzubilden, dass neben der durch eine Konturierung einer Blendenwelle hervorgerufenen Anzahl von Lichtfunktionen zusätzlich eine Markierungslichtfunktion erzeugbar ist.

Zur Lösung dieser Aufgabe weist die Erfindung die Merkmale des Patentanspruchs 1 auf.

Der besondere Vorteil der Erfindung besteht darin, dass neben einer Anzahl von vorzugsweise standardisierten Lichtfunktionen zusätzlich eine Markierungslichtfunktion durch Konturierung einer Blendenwelle der Projektionsscheinwerferanordnung erzeugt werden kann. Die Markierungslichtfunktion wird somit platzsparend in einem nach dem Projektionsprinzip arbeitenden Scheinwerfer integriert. Die langgestreckte Blendenwelle, die sich quer zur Hauptabstrahlrichtung erstreckt, weist mehrere Lichtfunktionssektoren auf, die sich in Umfangsrichtung der Blendenwelle erstrecken. In der

Markierungslichtfunktion ist die Blendenwelle um eine vertikale Achse verschwenkbar und/oder um eine Drehachse der Blendenwelle verdrehbar angeordnet, so dass stets zumindest ein Teil des zu markierenden Objektes beleuchtet werden kann. Der Markierungslichtfunktionssektor der Blendenwelle weist eine Blendkante auf, die abschnittsweise eine Ausnehmung oder eine Vertiefung aufweist für den Durchtritt eines das Objekt beleuchtenden Teillichtbündels. Vorteilhaft ermöglicht die Erfindung, dass ohne Bauraumanpassung und ohne weitere Bauteile eine Markierungslichtfunktion in eine auf einer Blendenwelle basierenden Projektionsscheinwerferanordnung integriert wird.

Nach einer Weiterbildung der Erfindung wird durch Verdrehung der Blendenwelle um eine Drehachse derselben eine Beleuchtungshöhe des zu markierenden Objektes variiert. Vorteilhaft wird hierdurch auf einfache Weise sichergestellt, dass bei Veränderung des Relativabstandes des Fahrzeugs zu dem Objekt stets das Objekt erkannt werden kann.

Nach einer Weiterbildung der Erfindung sind die Blendenwelle eines linken Projektionsscheinwerfers und eines rechten Projektionsscheinwerfers derart gleich oder unterschiedlich um einen Schwenkwinkel bezüglich der vertikalen Achse verschwenkbar angeordnet, dass eine vorgegebene oder variable Beleuchtungsbreite und/oder eine vorgegebene oder variable Beleuchtungsstärke des zu markierenden Objektes einstellbar ist. Um eine hohe Beleuchtungsstärke zu erzielen, können beispielsweise die Markierungslichtausnehmungen der Blendenwellen des linken und rechten Projektionsscheinwerfers auf denselben Bereich des zu markierenden Objektes ausgerichtet und damit überlagert sein. Um eine relativ große Beleuchtungsbreite des zu markierenden Objektes zu erzielen, sind die Markierungslichtausnehmungen der beiden Projektionsscheinwerfer auf unterschiedliche Bereiche des zu markierenden Objektes ausgerichtet. Beispielsweise können ein erster Teilbereich des Objektes der Markierungslichtausnehmung des linken Projektionsscheinwerfers und ein zweiter Teilbereich des Objektes der Markierungslichtausnehmung des rechten Projektionsscheinwerfers zugeordnet sein.

Nach einer Weiterbildung der Erfindung ist die einzige Ausnehmung in einem mittleren Bereich der Blendkante angeordnet, so dass durch Verschwenken der Blendenwelle um die vertikale Achse ein relativ großer horizontal verlaufender Bereich des Fahrzeugvorfeldes markiert werden kann.

Nach einer Weiterbildung der Erfindung sind benachbarte Konturenbereiche der Markierungslicht-Blendkante derart ausgebildet, dass eine Abblendlichtfunktion erzeugbar ist. Vorteilhaft kann in der Markierungslichtfunktion somit eine im Wesentlichen für den Gegenverkehr blendfreie Lichtverteilung erzeugt werden, die eine ausreichende Ausleuchtung des Fahrzeugvorfeldes ermöglicht.

Nach einer Weiterbildung der Erfindung ist die Lichtquelle mindestens eines der Projektionsscheinwerfer in der Markierungslichtfunktion mit einer vorgegebenen Frequenz ein- und ausschaltbar, so dass das zu markierende Objekt optisch hervorgehoben wird. Die Erkennbarkeit des zu markierenden Objektes kann hierdurch erhöht werden.

Weitere Vorteile der Erfindung ergeben sich aus den weiteren Unteransprüchen.

Ein Ausführungsbeispiel der Erfindung wird nachfolgend anhand der Zeichnungen näher erläutert.

Es zeigen:

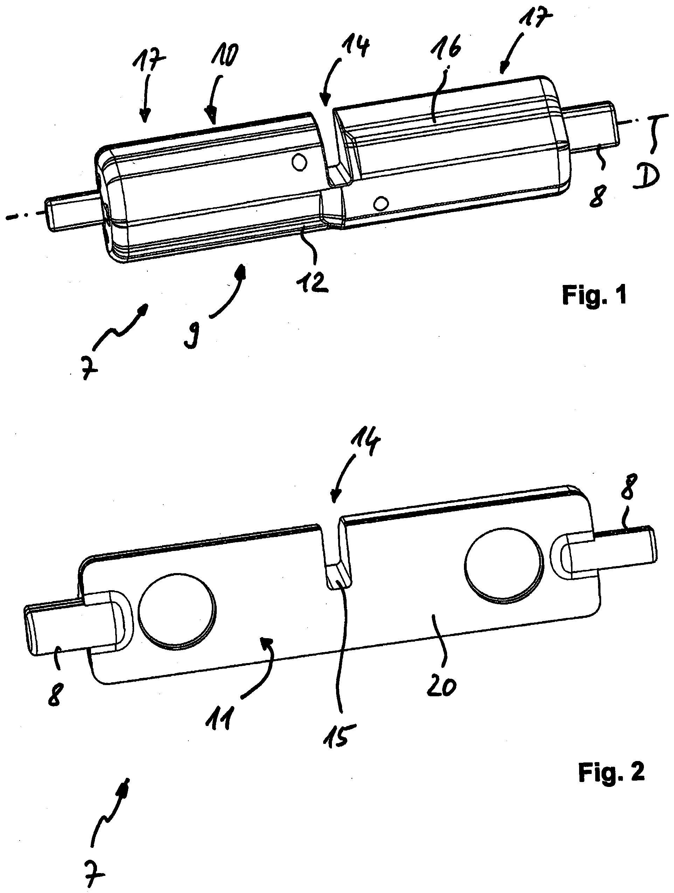

- Fig. 1: eine perspektivische Darstellung einer Blendenwelle von einer ersten Seite gesehen,
- Fig. 2: eine perspektivische Darstellung der Blendenwelle von einer zur Figur 1 gegenüberliegenden Seite aus gesehen,
- Fig. 3a: eine schematische Darstellung einer Markierungslichtverteilung, wobei sich eine Blendenwelle des linken Projektionsscheinwerfers in einer Markierungslichtstellung und ein eine Blendenwelle des rechten Projektionsscheinwerfers in einer Abblendlichtstellung befindet,
- Fig. 3b: einen schematischen Vertikalschnitt durch die in der Markierungslichtstellung befindliche Blendenwelle des linken Projektionsscheinwerfers,
- Fig. 4a: eine schematische Darstellung einer Abblendlichtverteilung, wobei sich die Blendenwelle des linken Projektionsscheinwerfers und des rechten Projektionsscheinwerfers in der Abblendlichtstellung befinden,
- Fig. 4b: einen schematischen Vertikalschnitt durch die Blendenwelle in der Abblendlichtstellung mit einem 15°-Anstieg und
- Fig. 5: eine schematische Draufsicht auf ein Fahrzeug mit einer Projektionsscheinwerferanordnung bestehend aus dem rechten Projektionsscheinwerfer und dem linken Projektionsscheinwerfer.

Eine erfindungsgemäße Projektionsscheinwerferanordnung 1 besteht im Wesentlichen aus einem linken Projektionsscheinwerfer 2 und einem rechten Projektionsscheinwerfer 3, die jeweils eckseitig an einer Front eines Fahrzeugs angeordnet sind.

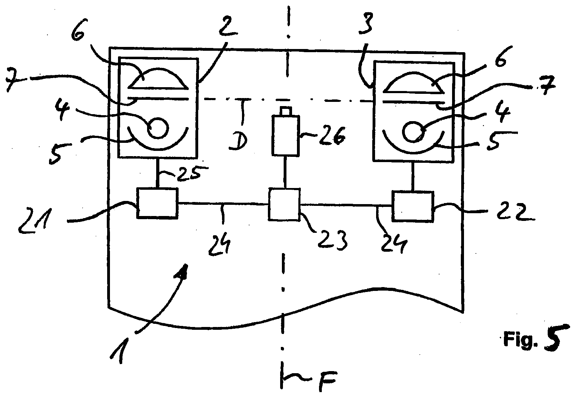

Wie aus Figur 5 ersichtlich ist, weisen der linke Projektionsscheinwerfer 2 und der rechte Projektionsscheinwerfer 3 jeweils einen schalenförmigen Reflektor 5 auf, an dessen ersten Brennort eine Lichtquelle 4 angeordnet ist. In der Nähe eines zweiten Brennortes des Reflektors 5 ist eine Linse 6 angeordnet. Der linke Projektionsscheinwerfer 2 und der rechte Projektionsscheinwerfer 3 weisen die gleichen Blendenwellen 7 auf, die jeweils um eine horizontale Drehachse D verschwenkbar angeordnet sind. Die Drehachse D verläuft horizontal und senkrecht zu einer optischen Achse der Reflektoren 5. Zur Verstellung der Blendenwellen 7 ist denselben eine Stelleinheit 21 bzw. 22 zugeordnet, an deren Eingang ein von einer Bildverarbeitungseinheit 23 bereitgestelltes Objekterkennungssignal 24 liegt. Die Bildverarbeitungseinheit 23 dient zur Verarbeitung von Bilddaten, die von einer Bilderfassungseinheit 26 bereitgestellt werden. Die Bilderfassungseinheit 26 kann beispielsweise als ein Kamerasystem ausgebildet sein, dass das gesamte Vorfeld (vorderseitiger Straßenraum) des Fahrzeugs erfasst und darin befindliche Objekte, wie beispielsweise am Straßenrand stehende Menschen oder Tiere oder Straßenschilder detektiert. Die Bilderfassungseinheit 26 ist derart aufgebaut, dass sich die Lage und/oder die Entfernung der Projektionsscheinwerfer 2, 3 zu dem zu markierenden Objekt im Vorfeld erfasst. Die Stelleinheit 21, 22 kann einen Mikrokontroller bzw. einen Mikroprozessor mit einem Speicher umfassen, in dem ein Lichtsteuerungsprogramm integriert ist.

Die Blendenwelle 7 ist langgestreckt ausgebildet und über stirnseitige Stifte 8 um die Drehachse D drehbar gelagert. Im Querschnitt ist die Blendenwelle 7 halbkreisförmig ausgebildet, wobei die Blendenwelle 7 in Umfangsrichtung mindestens drei Lichtfunktionssektoren 9, 10 und 11 für unterschiedliche Lichtfunktionen aufweist.

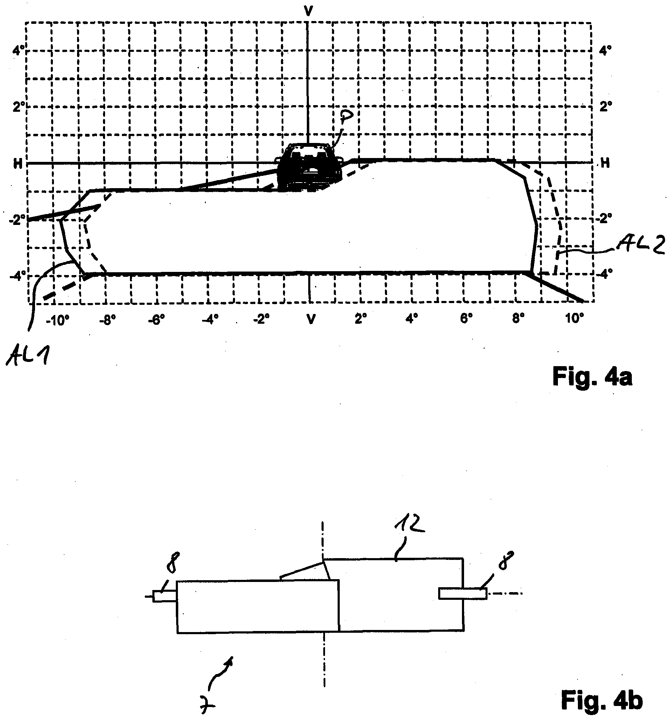

Der erste Lichtfunktionssektor 9 ist als ein adaptiver Abblendlichtfunktionssektor ausgebildet, der sich in einem rechten Winkel um die Drehachse D der Blendenwelle 7 erstreckt und der an einer Mantelfläche desselben eine Mehrzahl von im Wesentlichen axial verlaufenden Blendkanten 12 aufweist, deren Konturen unterschiedlichen Lichtverteilungen zugeordneten sind. Die Blendkante 12 kann beispielsweise derart konturiert sein, dass in der Abblendlichtstellung eine Hell-Dunkel-Grenze zur Erzeugung einer asymmetrischen Abblendlichtverteilung für Rechtsverkehr gemäß ECE-Norm erzeugt wird, siehe Figur 4b. Eine zweite Blendkante kann im Umfangsrichtung um einen spitzen Winkel versetzt zu der Blendkante 12 angeordnet sein und zur Erzeugung einer Stadtlichtverteilung dienen. In dem ersten Lichtfunktionssektor 9 können weiteren Blendkanten für Autobahnlichtverteilung und dergleichen angeordnet sein.

Der zweite Lichtfunktionssektor 10 ist als ein Markierungslichtfunktionssektor ausgebildet. Der Markierungslichtsektor 10 erstreckt sich in Umfangsrichtung der Blendenwelle 7 in einem Winkel von etwa 90°. Beispielsweise kann der Markierungslichtfunktionssektor auch einen Umfangswinkel von kleiner oder größer 90° umgeben. Vorzugsweise umspannen der Abblendlichtfunktionssektor und der Markierungslichtfunktionssektor 10 einen Umfangswinkel von 180°. Der Markierungslichtfunktionssektor 10 weist in einem mittleren Bereich 13 der Blendenwelle 7 eine rechteckförmige Ausnehmung 14 auf, deren Boden 15 im Bereich der Drehachse D angeordnet ist. Zu der Ausnehmung 14 benachbarte Bereiche 17 des Markierungslichtfunktionssektors 10 sind im Querschnitt im Wesentlichen kreis- oder bogenförmig ausgebildet, so dass in der Markierungslichtstellung im Wesentlichen eine gerade Blendkante 16 wirksam ist, die in dem mittleren Bereich 13 die stufenförmige Ausnehmung 14 aufweist.

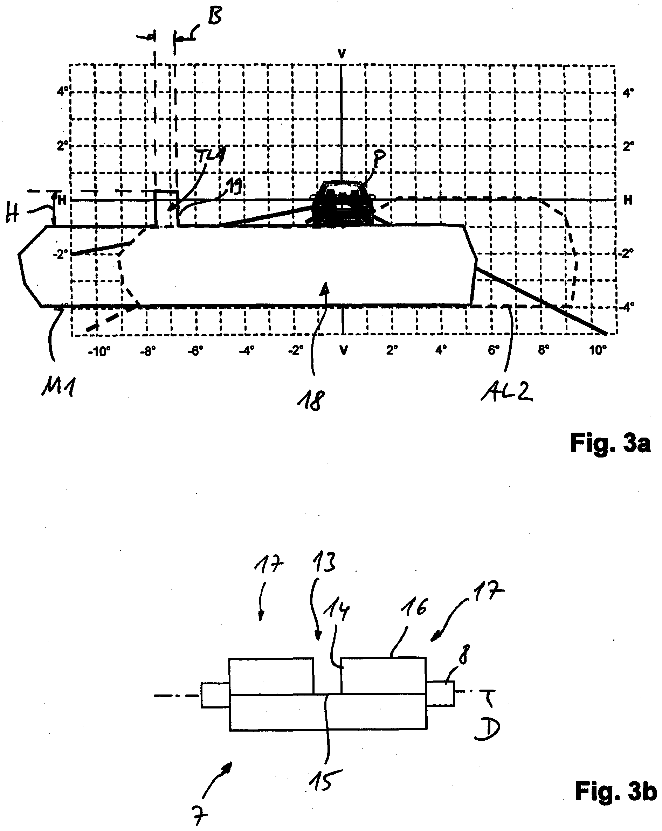

Die Ausnehmung 14 in der Blendenwelle 7 bzw. der Blendkante 16 ermöglicht, dass zumindest ein Teil des im Fahrzeugvorfeld befindlichen zu markierenden Objektes beleuchtet wird, ohne dass weitere Verkehrsteilnehmer, wie beispielsweise entgegenkommende Fahrzeuge oder vorausfahrende Fahrzeuge P geblendet werden. Das zu markierende Objekt wird hierbei durch ein durch die Ausnehmung 14 verlaufendes Teillichtbündel TL1 beleuchtet. Nach der in Figur 3a dargestellten Ausführungsform befindet sich nur der linke Projektionsscheinwerfer 2 in der Markierungslichtstellung unter Bildung einer Markierungslichtverteilung M1 mit einem Höcker 19 zur Erzeugung der Markierungslichtfunktion, während der rechte Projektionsscheinwerfer 3 sich in einer Abblendlichtstellung unter Bildung einer Abblendlichtverteilung AL 2 befindet. Die zur Ausnehmung 14 benachbarten Blendenbereiche 17 entsprechen mit ihrer Konturierung einer Abblendlichtverteilung und ermöglichen somit eine relativ große Beleuchtungsstärke in einem zentralen Bereich 18 der sich aus der Markierungslichtverteilung M1 des linken Projektionsscheinwerfers 2 und der Abblendlichtverteilung AL2 des rechten Projektionsscheinwerfers 3 zusammensetzenden Gesamtlichtverteilung.

Damit das Teillichtbündel TL1 dem zu markierenden Objekt in horizontaler Richtung nachgeführt werden kann, ist der linke Projektionsscheinwerfer 2 zusammen mit der Blendenwelle 7 um einen Schwenkwinkel um eine vertikale Achse schwenkbar angeordnet. Zur Einstellung einer vorgegebenen Beleuchtungshöhe H des zu markierenden Objektes wird die Blendenwelle 7 um einen entsprechenden Drehwinkel um die Drehachse D verdreht. Vorzugsweise wirkt die Stelleinheit 21 mit einem Markierungsstellsignal 25 so auf einen die Blendenwelle 7 des Projektionsscheinwerfers 2 verstellenden Aktor ein, dass das zu markierende Objekt stets mit einer an die Größe des Objektes angepassten Beleuchtungshöhe H ausgeleuchtet wird.

Befindet sich auch der rechte Projektionsscheinwerfer 3 in der Markierungslichtfunktion, kann ein nicht dargestellter Höcker der Markierungslichtfunktion des zweiten Projektionsscheinwerfers 3 mit dem Höcker 19 der ersten Markierungslichtverteilung M1 überlagert werden. Sind die Projektionsscheinwerfer 2 und 3 in einem unterschiedlichen Schwenkwinkel in horizontaler Richtung unterschiedliche ausgerichtet, können die Höcker 19 der Markierungslichtverteilungen beispielsweise nebeneinander angeordnet sein, so dass eine Beleuchtungsbreite einstellbar ist, die größer ist als eine Beleuchtungsbreite B des Höckers 19. Überdecken sich die beiden Höcker 19 des linken und rechten Projektionsscheinwerfers 2, 3, kann die Beleuchtungsstärke im Bereich des zu markierenden Objektes erhöht werden.

Durch eine aufeinander abgestimmte Ansteuerung des ersten linken Projektionsscheinwerfers 2 und des rechten Projektionsscheinwerfers 3 kann somit die Beleuchtungshöhe H und die Beleuchtungsbreite B im Bereich des zu markierenden Objektes eingestellt bzw. variiert werden.

Darüber hinaus können die Lichtquellen 4 des in der Markierungslichtfunktion befindlichen linken Projektionsscheinwerfers 2 und/oder rechten Projektionsscheinwerfers 3 mit einer vorgegebenen Frequenz ein- und ausgeschaltet werden, so dass das zu markierende Objekt optisch hervorgehoben wird und somit für den Fahrzeugführer besser wahrnehmbar ist. Da zu diesem Zweck vorzugsweise lediglich ein einziger Projektionsscheinwerfer 2 oder 3 angesteuert wird und sich der andere Projektionsscheinwerfer beispielsweise in der Abblendlichtfunktion befindet, ist eine ausreichende Ausleuchtung des Fahrzeugvorfeldes stets gegeben.

Der dritte Lichtfunktionssektor 11 ist als ein Fernlichtfunktionssektor ausgebildet, der sich in einem Umfangswinkelbereich von 180° auf einer zu dem Abblendlichtfunktionssektor 9 und Markierungslichtfunktionssektor 10 gegenüberliegenden Seite angeordnet ist. Es ergibt sich somit eine im Wesentlichen ebene Fläche 20 des Fernlichtfunktionssektors 11, die bei entsprechender Drehstellung der Blendenwelle 7 eine Blendkante erzeugt zur Erzeugung der Fernlichtverteilung.

Wie aus der Figur 4a ersichtlich ist, befinden sich zur Erzeugung einer Abblendlichtfunktion sowohl die Blendenwelle 7 des linken Projektionsscheinwerfers 2 als auch des rechten Projektionsscheinwerfers 3 in einer Drehstellung, in der die Blendkante 12 wirksam ist. Ein vorausfahrendes Fahrzeug P wird somit nicht geblendet.

Nach einer alternativen Ausführungsform kann zur Erzeugung der Markierungslichtfunktion die Blendenwelle 7 des rechten Projektionsscheinwerfers 3 in einer Drehstellung sein, in der die Blendkante 16 zur Erzeugung der Markierungslichtfunktion wirksam ist, während sich die Blendenwelle 7 des linken Projektionsscheinwerfers 2 in einer Drehstellung befindet, in der die Abblendlicht-Blendkante 12 zur Erzeugung einer Hell-Dunkel-Grenze mit einem 15°-Anstieg wirksam ist.

Nach einer alternativen Ausführungsform kann die Ausnehmung 14 statt rechteckförmig auch trapezförmig oder dreieckförmig oder bogenförmig ausgebildet sein. Wesentlich ist, dass die Ausnehmung 14 so groß ausgebildet ist, dass zumindest ein Teilbereich des zu markierenden Objektes, das sich oberhalb einer Hell-Dunkel-Grenze für Abblendlicht befindet, beleuchtbar ist.

**Bezugszeichenliste**

| | | | |
|---|---|---|---|
| 1 | Projektionsscheinwerferanordnung | H | Beleuchtungshöhe |
| 2 | linker Projektionsscheinwerfer | B | Beleuchtungsbreite |
| 3 | rechter Projektionsscheinwerfer | D | Drehachse |
| 4 | Lichtquelle | P | Fahrzeug |
| 5 | Reflektor | M1 | Markierungslichtverteilung |
| 6 | Linse | AL1 | Abblendlichtverteilung |
| 7 | Blendenwelle | | |
| 8 | Stift | | |
| 9 | Lichtfunktionssektor | | |
| 10 | Lichtfunktionssektor | | |
| 11 | Lichtfunktionssektor | | |
| 12 | Blendkante | | |
| 13 | mittlerer Bereich | | |
| 14 | Ausnehmung | | |
| 15 | Boden | | |
| 16 | Blendkante | | |
| 17 | Blendenbereiche | | |
| 18 | zentraler Bereich | | |
| 19 | Höcker | | |
| 20 | ebene Fläche | | |
| 21 | Stelleinheit | | |
| 22 | Stelleinheit | | |
| 23 | Bilderfassungseinheit | | |
| 24 | Objekterkennungssignal | | |
| 25 | Markierungsstellsignal | | |
| 26 | Bilderfassungseinheit | | |

## Patentansprüche

1. Projektionsscheinwerferanordnung für Fahrzeuge mit einem linken Projektionsscheinwerfer (2) und mit einem rechten Projektionsscheinwerfer (3), die jeweils enthalten:
- einen zwei Brennorte aufweisenden Reflektor (5),
- eine in einem ersten Brennort des Reflektors (5) angeordnete Lichtquelle (4),
- eine dem Reflektor (5) in Lichtabstrahlrichtung vorgelagerte Linse (6), deren Brennpunkt in der Nähe des zweiten Brennportes des Reflektors (5) angeordnet ist und
- eine zwischen der Linse (6) und dem Reflektor (5) angeordnete Blendenwelle (7), die mittels einer Stelleinheit (21, 22) um eine horizontale und quer zur optischen Achse verlaufenden Drehachse (D) in mehrere Drehstellungen verstellbar ist, wobei den Drehstellungen jeweils eine Blendkante (16) der Blendenwelle (7) zugeordnet ist zur Erstellung einer Hell-Dunkel-Grenze für eine vorgegebene Lichtverteilung,
wobei
- eine Bilderfassungseinheit (23) zur Erfassung von in einem Vorfeld des Fahrzeugs befindlichen Objekten vorgesehen ist, und
- eine Bildverarbeitungseinheit (26) zur Verarbeitung der von der Bilderfassungseinheit (23) erzeugten Bilddaten vorgesehen ist,
**dadurch gekennzeichnet, dass**
- ein Lichtfunktionssektor (10) der Blendenwelle (7) als ein Markierungslichtfunktionssektor (10) ausgebildet ist mit einer eine Ausnehmung (14) aufweisenden Blendkante (16), wobei in einer Markierungslichtfunktion die Stelleinheit (21, 22) mit einem Markierungsstellsignal (25) derart zum einen die Blendenwelle (7) um die Drehachse (D) derselben verdreht und/oder zum anderen den linken Projektionsscheinwerfer (2) und/oder den rechten Projektionsscheinwerfer (3) um eine vertikale Achse verschwenkt, dass mindestens ein Teil des zu markierenden Objektes mittels eines durch die Ausnehmung (14) verlaufenden Teillichtbündels (TL1) beleuchtet wird, und
- die Blendenwelle (7) langgestreckt ausgebildet ist, wobei die Blendenwelle (7) über stirnseitige Stifte (8) um die Drehachse (D) drehbar gelagert ist.

2. Projektionsscheinwerferanordnung nach Anspruch 1, **dadurch gekennzeichnet, dass** eine Beleuchtungshöhe (H) des zu markierenden Objektes abhängig ist von einem Drehwinkel der Blendenwelle (7) um die Drehachse (D) derselben.

3. Projektionsscheinwerferanordnung nach Anspruch 1 oder 2, **dadurch gekennzeichnet, dass** der linke Projektionsscheinwerfer (2) und der rechte Projektionsscheinwerfer (3) derart gleich oder unterschiedlich um einen Schwenkwinkel bezüglich der vertikalen Achse verschwenkbar sind, dass eine vorgegebene oder variable Beleuchtungsbreite (B) und/oder eine vorgegebene oder variable Beleuchtungsstärke des zu markierenden Objektes einstellbar ist.

4. Projektionsscheinwerferanordnung nach einem der Ansprüche 1 bis 3, **dadurch gekennzeichnet, dass** die Lichtquelle (4) des linken Projektionsscheinwerfers (2) und/oder des rechten Projektionsscheinwerfers (3) in der Markierungslichtfunktion entsprechend einer vorgegebenen Frequenz ein- und/oder aussschaltbar ist zur optischen Hervorhebung des zu markierenden Objektes.

5. Projektionsscheinwerferanordnung nach einem der Ansprüche 1 bis 4, **dadurch gekennzeichnet, dass** zur Bildung der Markierungslichtfunktion sich die Blendenwelle (7) des linken Projektionsscheinwerfers (2) und/oder des rechten Projektionsscheinwerfers (3) in einer Drehstellung befinden, in der der Markierungslichtfunktionssektor (10) der Blendenwelle (7) wirksam ist.

6. Projektionsscheinwerferanordnung nach einem der Ansprüche 1 bis 5, **dadurch gekennzeichnet, dass** die Ausnehmung (14) in einem mittleren Bereich der Blendkante (16) angeordnet ist.

7. Projektionsscheinwerferanordnung nach einem der Ansprüche 1 bis 6, **dadurch gekennzeichnet, dass** zur Ausnehmung (14) benachbarte Bereiche der Blendkante (16) derart ausgebildet sind, dass eine Abblendlichtverteilung (AL1) erzeugbar ist.

8. Projektionsscheinwerferanordnung nach einem der Ansprüche 1 bis 7, **dadurch gekennzeichnet, dass** die Ausnehmung (14) im Längsschnitt der Blendenwelle (7) rechteckförmig oder trapezförmig oder dreieckförmig oder bogenförmig ausgebildet ist.

9. Projektionsscheinwerferanordnung nach einem der Ansprüche 1 bis 8, **dadurch gekennzeichnet, dass** die Blendenwelle (7) als weiteren Lichtfunktionssektor einen Abblendlichtfunktionssektor (9) zur Erzeugung einer adaptiven Abblendlichtverteilung (AL1, AL2) und einen Fernlichtfunktionssektor (11) zur Erzeugung einer Fernlichtverteilung aufweist.

10. Projektionsscheinwerferanordnung nach einem der Ansprüche 1 bis 9, **dadurch gekennzeichnet, dass** der Markierungslichtfunktionssektor (10) einen Drehwinkelbereich um die Drehachse (D) der Blendenwelle (7) im Bereich von 90° umfasst.

## Claims

1. Projector headlamp arrangement for vehicles with a left-hand projector headlamp (2) and a right-hand projector headlamp (3), each comprising:
- a reflector (5) having two focal points,
- a light source (4) arranged in a first focal point of the reflector (5),
- a lens (6) arranged in front of the reflector (5) in the light radiation direction, whose focal point is arranged in the vicinity of the second focal point of the reflector (5) and
- a shutter shaft (7) arranged between the lens (6) and the reflector (5) and being adjustable around an axis of rotation (D) running horizontal and at right angles to the optical axis in several rotational positions by means of an actuator unit (21, 22), wherein the rotational positions are each assigned to a shutter edge (16) of the shutter shaft (7) to create a cut-off line for a given light distribution,
wherein
- an image capture unit (23) for the capturing of an object in front of the vehicle is provided,
- and an image processing unit (26) for the processing of the image data generated by the image capture unit (23) is provided,
**characterized in that**
- a light function sector (10) of the shutter shaft (7) is embodied as a marking light function sector (10) having a shutter edge (16) having a recess (14), wherein in a marking light function the actuator unit (21, 22), with a marking light actuator signal (25), rotates on the one hand the shutter shaft (7) around the axis of rotation (D) of the same and/ or on the other hand swivels the left-hand projection headlamp (2) and/ or the right-hand projection headlamp (3) around a vertical axis, so that at least a part of the object to be marked is illuminated by a partial light beam (TL1) running through the recess (14), and
- the shutter shaft (7) is embodied in an elongated manner, wherein shutter shaft (7) is pivoted around the axis of rotation (D) with pins (8) on the front faces.

2. Projector headlamp arrangement according to Claim 1, **characterized in that** an illumination height (H) of the object to be marked depends on a rotation angle of the shutter shaft (7) around the axis of rotation (D) of the same.

3. Projector headlamp arrangement according to Claim 1 or 2, **characterized in that** the left-hand projector headlamp (2) and the right-hand projector headlamp (3) can be swivelled identically or differently by a swivel angle relative to the vertical axis so that a given or a variable illumination width (B) and/ or a given or a variable illuminance of the object to be marked can be set.

4. Projector headlamp arrangement according to one of the Claims 1 to 3, **characterized in that** in the marking light function, the light source (4) of the left-hand projection headlamp (2) and/ or the right-hand projection headlamp (3) can be switched on and/ or off according to a given frequency to optically mark the object to be marked.

5. Projector headlamp arrangement according to one of the Claims 1 to 4, **characterized in that** for the generation of the marking light function, the shutter shaft (7) of the left-hand projection headlamp (2) and/ or the right-hand projection headlamp (3) is in a rotational position in which the marking light function sector (10) of the shutter shaft (7) is active.

6. Projector headlamp arrangement according to one of the Claims 1 to 5, **characterized in that** the recess (14) is arranged in a central region of the shutter edge (16).

7. Projector headlamp arrangement according to one of the Claims 1 to 6, **characterized in that** areas of the shutter edge (16) neighboring the recess (14) are embodied so that a low beam light distribution (AL1) can be generated.

8. Projector headlamp arrangement according to one of the Claims 1 to 7, **characterized in that** the recess (14) in the longitudinal section of the shutter shaft (7) is embodied in a rectangular or a trapezoidal or a triangular or a curved manner.

9. Projector headlamp arrangement according to one of the Claims 1 to 8, **characterized in that** the shutter shaft (7) has, as a further light function sector, a low beam funcion sector (9) for the generation of an adaptive low beam light distribution (AL1, AL2) and a high beam function sector (11) for the generation of a high beam light distribution.

10. Projector headlamp arrangement according to one of the Claims 1 to 9, **characterized in that** the marking light function sector (10) covers a rotational angle range around the axis of rotation (D) of the shutter shaft (7) in the range of 90°.

## Revendications

1. Agencement de projecteur de projection pour véhicules avec un projecteur de projection gauche (2) et avec un projecteur de projection droit (3) qui contiennent chaque fois :
- un réflecteur (5) présentant deux foyers,
- une source lumineuse (4) disposée dans un premier foyer du réflecteur (5),
- une lentille (6) en amont du réflecteur (5) en direction du rayonnement de lumière dont le foyer est disposé à proximité du deuxième foyer du réflecteur (5),
- un arbre de masque (7) disposé entre la lentille (6) et le réflecteur (5) qui est réglable autour d'un axe de rotation (D) horizontal et transversal par rapport à l'axe optique dans plusieurs positions de rotation au moyen d'une unité de réglage (21, 22), les positions de rotation étant associées chaque fois à une arête de masque (16) de l'arbre de masque (7) afin de réaliser une coupure clair-obscur pour une répartition lumineuse prédéfinie,
- une unité d'acquisition d'images (23) étant prévue pour détecter des objets se situant dans une zone en avant du véhicule et
- une unité de traitement d'images (26) étant prévue pour traiter les données d'images engendrées par l'unité d'acquisition d'images (23),
**caractérisé en ce que**
- un secteur de fonction d'éclairage (10) de l'arbre de masque (7) est réalisé en tant que secteur de fonction d'éclairage de marquage (10), avec une arête de masque (16) comprenant un évidement (14), dans une fonction d'éclairage de marquage l'unité de réglage (21, 22) avec un signal de commande de marquage (25) dérèglant d'un côté l'arbre de masque (7) autour de l'axe de rotation (D) de celui-ci et/ou pivotant de l'autre côté le projecteur de projection gauche (2) et/ou le projecteur de projection droit (3) autour d'un axe vertical de telle manière qu'au moins une partie de l'objet à marquer soit éclairée au moyen d'un faisceau de lumière partielle (TL1) traversant l'évidement (14) et
- l'arbre de masque (7) s'étend en longueur, l'arbre de masque (7) étant monté pivotant autour de l'axe de rotation (D) par le biais des broches frontales (8).

2. Agencement de projecteur de projection selon la revendication 1, **caractérisé en ce que** la hauteur d'éclairage (H) de l'objet à marquer dépend d'un angle de rotation de l'arbre de masque (7) autour de l'axe de rotation (D) de celui-ci.

3. Agencement de projecteur de projection selon la revendication 1 ou 2, **caractérisé en ce que** le projecteur de projection gauche (2) et le projecteur de projection droit (3) sont susceptibles de pivoter identiquement ou différemment autour d'un angle de pivotement par rapport à l'axe vertical de telle manière qu'une largeur d'éclairage (B) prédéterminée ou variable et/ou une intensité lumineuse prédéterminée ou variable de l'objet à marquer soit réglable.

4. Agencement de projecteur de projection selon l'une des revendications 1 à 3, **caractérisé en ce que** la source de lumière (4) du projecteur de projection gauche (2) et/ou du projecteur de projection droit (3) pouvant être activée ou désactivée selon une fréquence prédéterminée dans la fonction d'éclairage de marquage pour souligner optiquement l'objet à marquer.

5. Agencement de projecteur de projection selon l'une des revendications 1 à 4, **caractérisé en ce que** pour réaliser la fonction d'éclairage de marquage l'arbre de masque (7) du projecteur de projection gauche (2) et/ou du projecteur de projection droit (3) se trouve dans une position de rotation dans laquelle le secteur de fonction d'éclairage de marquage (10) de l'arbre de masque (7) prend effet.

6. Agencement de projecteur de projection selon l'une des revendications 1 à 5, **caractérisé en ce que** l'évidement (14) est disposé dans une zone centrale de l'arête de masque (16).

7. Agencement de projecteur de projection selon l'une des revendications 1 à 6, **caractérisé en ce que** des zones de l'arête de masque (16) adjacentes à l'évidement (14) sont réalisées de telle manière qu'une répartition lumineuse du feu de croisement (AL1) puisse être engendrée.

8. Agencement de projecteur de projection selon l'une des revendications 1 à 7, **caractérisé en ce que** l'évidement (14) dans la section longitudinale de l'arbre de masque (7) est réalisé de manière rectangulaire ou trapézoïdale ou triangulaire ou en forme d'arc.

9. Agencement de projecteur de projection selon l'une des revendications 1 à 8, **caractérisé en ce que** l'arbre de masque (7) présente un secteur de fonction de feu de croisement (9) en tant que secteur de fonction d'éclairage supplémentaire pour engendrer une répartition lumineuse du feu de croisement adaptative (AL1 , AL 2) et un secteur de fonction de feu de route (11) pour engendrer une répartition lumineuse du feu de route.

10. Agencement de projecteur de projection selon l'une des revendications 1 à 9, **caractérisé en ce que** le secteur de fonction d'éclairage de marquage (10) comprend une plage d'angle de rotation autour de l'axe de rotation (D) de l'arbre de masque (7) dans la plage de 90°.
